# EUROPEAN PATENT SPECIFICATION

(11) **EP 4 095 002 B1**
(45) Date of publication and mention of the grant of the patent: **31.07.2024**
(21) Application number: 20920075.7
(22) Date of filing: 17.02.2020
(51) Int. Cl.: B60S 1/02, B08B 3/12

(54) **VEHICLE WINDOW CLEANING METHOD, VEHICLE WINDOW CLEANING APPARATUS, AND VEHICLE**
FAHRZEUGFENSTERREINIGUNGSVERFAHREN, FAHRZEUGFENSTERREINIGUNGSVORRICHTUNG UND FAHRZEUG
PROCÉDÉ ET APPAREIL DE NETTOYAGE DE VITRE DE VÉHICULE, ET VÉHICULE

(43) Date of publication of application: 30.11.2022
(73) Proprietor: Huawei Technologies Co., Ltd., Shenzhen, Guangdong 518129 (CN)
(72) Inventor: WU, Qiqiang, Shenzhen, Guangdong 518129 (CN)
(74) Representative: Maiwald GmbH
(86) International application number: PCT/CN2020/075570
(87) International publication number: WO 2021/163849

(56) References cited:
- CN-A- 101 885 323
- CN-A- 103 978 952
- CN-A- 104 709 241
- CN-A- 105 882 359
- CN-U- 208 907 884
- JP-A- H10 206 400
- SU-A1- 833 463
- No further relevant documents disclosed

## Description

### TECHNICAL FIELD

This application relates to the field of vehicle window cleaning technologies, and in particular, to a vehicle window cleaning method, a vehicle window cleaning apparatus, and a vehicle.

### BACKGROUND

Rainwater and foreign matters on vehicle windows have always been a difficult problem for drivers. Especially in rainy days, rainwater and foreign matters seriously affect the driver's vision. In an existing method, cleaning is mainly performed by controlling a wiper. However, because friction exists between the wiper and a glass surface in a cleaning process, energy consumption is high. In addition, a cleaning range of the wiper is limited, and there is a dead zone for cleaning. Moreover, there are water marks on a vehicle window cleaned by using the wiper, which are prone to cause distraction of a driver, and even cause a traffic accident. CN103978952A discloses an ultrasonic automotive windshield rain removal system.

### SUMMARY

The invention is set out in the appended set of claims.

Embodiments of this application provide a vehicle and a vehicle window cleaning method and a vehicle window cleaning apparatus that are applied to the vehicle. A plurality of ultrasonic transducers are used to replace wipers in the conventional technology to clean glass, so that power consumption can be reduced and cleanliness can be improved.

According to a first aspect, an embodiment of this application discloses a vehicle window cleaning method, where a plurality of ultrasonic transducers are disposed on a vehicle window. The vehicle window cleaning method includes: detecting the vehicle window to obtain detection information; and when determining, based on the detection information, that there is a foreign matter on the vehicle window, controlling the plurality of ultrasonic transducers to work to clean the vehicle window.

The ultrasonic transducer is an apparatus for converting electric energy into a mechanical wave. In addition, all components that can emit a sound wave and implement cleaning may be referred to as ultrasonic transducers.

In the technical solution of the first aspect, because the plurality of ultrasonic transducers are used to replace conventional wipers, no friction exists when the vehicle window is cleaned. This reduces an energy loss. In addition, because a propagation direction of an ultrasonic wave generated by the ultrasonic transducer is parallel and close to a surface of the vehicle window, the driver's vision is not blocked. Moreover, the vehicle window can be cleaned back and forth due to a reflection feature of the ultrasonic wave, so that cleanliness is improved. This resolves a problem of high power consumption and low cleanliness that exist when wipers are used for cleaning on a vehicle in the conventional technology.

According to the first aspect, to further reduce power consumption, the controlling the plurality of ultrasonic transducers to work to clean the vehicle window includes: dividing the vehicle window based on locations in which the plurality of ultrasonic transducers are disposed; determining a specific area in which the foreign matter is located; and controlling an ultrasonic transducer corresponding to the area in which the foreign matter is located to work to clean the vehicle window.

According to the first aspect, in a possible implementation, the plurality of ultrasonic transducers are controlled to work to clean the vehicle window, and after a preset time period, the plurality of ultrasonic transducers are controlled to stop working. This can avoid a case in which the foreign matter is cleaned completely but the ultrasonic transducers continue to work, and can further reduce power consumption and reduce energy waste.

According to the first aspect, in a possible implementation, to improve cleanliness and reduce costs, the plurality of ultrasonic transducers are separately arranged in a first direction and a second direction along edges of the vehicle window, and the first direction and the second direction intersect; and the dividing the vehicle window based on locations in which the plurality of ultrasonic transducers are disposed includes: dividing the vehicle window into several areas based on division lines between adjacent ultrasonic transducers in the first direction and the second direction and an intersection point of the division lines, where each area is corresponding to at least one ultrasonic transducer in the first direction and at least one ultrasonic transducer in the second direction. The controlling an ultrasonic transducer corresponding to the area in which the foreign matter is located to work to clean the vehicle window includes: controlling all ultrasonic transducers that are in the first direction and the second direction and that are corresponding to the area in which the foreign matter is located to work to clean the vehicle window; or controlling at least one ultrasonic transducer that is in the first direction and the second direction and that is corresponding to the area in which the foreign matter is located to work to clean the vehicle window. In this way, energy consumption can be further reduced.

According to the first aspect, in a possible implementation, to improve cleanliness of the vehicle window, after the cleaning the vehicle window, the vehicle window cleaning method further includes: determining whether the area in which the foreign matter is located is clean after cleaning; and when determining that the area in which the foreign matter is located is clean after cleaning, controlling the ultrasonic transducer corresponding to the area in which the foreign matter is located to stop working. Specifically, all the ultrasonic transducers that are in the first direction and the second direction and that are corresponding to the area in which the foreign matter is located are controlled to stop working.

According to the first aspect, in a possible implementation, to improve detection precision and precision of determining a location of the foreign matter, the detection information is image information; and the determining a specific area in which the foreign matter is located includes: determining, based on the image information and a neural network classification model, the specific area in which the foreign matter is located.

According to the first aspect, in a possible implementation, before the cleaning the vehicle window, the vehicle window cleaning method further includes: determining, based on the neural network classification model, whether the foreign matter is water; and spraying detergent when determining that the foreign matter is not water. This can improve cleanliness for non-water foreign matters.

According to the first aspect, in a possible implementation, the neural network classification model is obtained by inputting several training sets into a constructed neural network for training, and the several training sets are obtained by classifying foreign matters into two types: water and non-water, selecting objects of a same type, and sequentially arranging the objects as a training sample based on each area assigned a unique value. In this way, statistics and analysis of big data can improve precision of determining the location of the foreign matter and the type of the foreign matter.

According to a second aspect, an embodiment of this application discloses a vehicle window cleaning apparatus, including a detection apparatus, a data processing module, a plurality of ultrasonic transducers, a drive module, and a main control module. The plurality of ultrasonic transducers are disposed on a vehicle window. The detection apparatus is configured to detect cleaning information of the vehicle window to obtain detection information. The data processing module is configured to process the detection information to determine whether there is a foreign matter on the vehicle window. The drive module is configured to generate an impulse voltage to drive the plurality of ultrasonic transducers to work. The main control module is connected to the data processing module and the drive module, and is configured to: when it is determined that there is a foreign matter on the vehicle window, control the drive module to drive the plurality of ultrasonic transducers to work to clean the vehicle window.

The ultrasonic transducer is an apparatus for converting electric energy into a mechanical wave. In addition, all components that can emit an ultrasonic wave may be referred to as ultrasonic transducers.

In the technical solution of the second aspect, because the plurality of ultrasonic transducers are used to replace conventional wipers, no friction exists when the vehicle window is cleaned. This reduces an energy loss. In addition, because a propagation direction of an ultrasonic wave generated by the ultrasonic transducer is parallel and close to a surface of the vehicle window, the driver's vision is not blocked. Moreover, the vehicle window can be cleaned back and forth due to a reflection feature of the ultrasonic wave, so that cleanliness is improved. This resolves a problem of high power consumption and low cleanliness that exist when wipers are used for cleaning on a vehicle in the conventional technology.

According to the second aspect, to further reduce power consumption, the data processing module is configured to divide the vehicle window based on locations in which the plurality of ultrasonic transducers are disposed, and determine a specific area in which the foreign matter is located; and the main control module is configured to control the drive module to drive an ultrasonic transducer corresponding to the area in which the foreign matter is located to work to clean the vehicle window.

According to the second aspect, in a possible implementation, the main control module is configured to control the plurality of ultrasonic transducers to work to clean the vehicle window, and after a preset time period, control the plurality of ultrasonic transducers to stop working. In this way, a case in which the foreign matter is cleaned but the ultrasonic transducers continue to work can be avoided, and power consumption and energy waste can be further reduced.

According to the second aspect, in a possible implementation, to improve cleanliness and reduce costs, the plurality of ultrasonic transducers are separately arranged in a first direction and a second direction along edges of the vehicle window, and the first direction and the second direction intersect; and the main control module divides the vehicle window into several areas based on division lines between adjacent ultrasonic transducers in the first direction and the second direction and an intersection point of the division lines, where each area is corresponding to at least one ultrasonic transducer in the first direction and at least one ultrasonic transducer in the second direction.

According to the second aspect, in a possible implementation, to improve cleanliness of the vehicle window, after the control module controls the drive module to drive the ultrasonic transducer corresponding to the area in which the foreign matter is located to work to clean the vehicle window, the data processing module is further configured to determine whether the area in which the foreign matter is located is clean after cleaning; and the main control module is further configured to: when it is determined that the area in which the foreign matter is located is clean after cleaning, control the drive module to stop driving the ultrasonic transducer corresponding to the area in which the foreign matter is located. Specifically, the control module is configured to control all ultrasonic transducers that are in the first direction and the second direction and that are corresponding to the area in which the foreign matter is located to stop working.

According to the second aspect, in a possible implementation, to improve detection precision and precision of determining a location of the foreign matter, the detection apparatus is a camera; the detection information is image information; and the data processing module is configured to determine, based on the image information and a neural network classification model, the specific area in which the foreign matter is located.

According to the second aspect, in a possible implementation, to improve cleanliness for non-water foreign matters, the vehicle window cleaning apparatus further includes an auxiliary cleaning apparatus and a cleaning control module connected to the auxiliary cleaning apparatus. The main control module is further connected to the cleaning control module. The data processing module is further configured to determine, based on the neural network classification model, whether the foreign matter is water; and the main control module is further configured to: when it is determined that the foreign matter is not water, control, by using the cleaning control module, the auxiliary cleaning apparatus to spray detergent.

According to the second aspect, in a possible implementation, to improve precision of determining the location of the foreign matter and the type of the foreign matter, the neural network classification model is obtained by inputting several training sets into a constructed neural network for training, and the several training sets are obtained by classifying foreign matters into two types: water and non-water, selecting objects of a same type, and sequentially arranging the objects as a training sample based on each area assigned a unique value.

According to the second aspect, in a possible implementation, to drive the ultrasonic transducer by using a vehicle head unit, the drive module includes a voltage step-up unit and a half-bridge drive unit. The voltage step-up unit is configured to step up a voltage for a low-voltage direct current provided by a power supply of the vehicle head unit. The half-bridge drive unit is connected to the voltage step-up unit, and is configured to convert a direct current obtained after the voltage step-up into a high impulse voltage at a frequency corresponding to the ultrasonic transducer.

According to the second aspect, in a possible implementation, the voltage step-up unit includes an inductor, a control switch, a first diode, a first capacitor, and a voltage stabilizing diode. A first end of the inductor is connected to the power supply of the vehicle head unit, and a second end of the inductor is connected to a first connection end of the control switch. A second connection end of the control switch is grounded, and a control end of the control switch is connected to a generator of a high-frequency pulse signal and is configured to receive the high-frequency pulse signal. An anode of the first diode is electrically connected between the second end of the inductor and the first connection end of the control switch, a cathode of the first diode is grounded through the first capacitor, and the cathode of the first diode is further connected to the half-bridge drive unit. A cathode of the voltage stabilizing diode is connected to the cathode of the first diode, and an anode of the voltage stabilizing diode is grounded.

According to the second aspect, in a possible implementation, the first connection end, the second connection end, and the control end of the control switch respectively correspond to a collector, an emitter, and a base of an NPN transistor.

According to the second aspect, in a possible implementation, the half-bridge drive unit includes a control unit, a first electronic switch, and a second electronic switch. A first connection end of the first electronic switch is connected to the voltage step-up unit, a second connection end of the first electronic switch is connected to a first connection end of the second electronic switch, and a control end of the first electronic switch is connected to a first output pin of the control unit. A second connection end of the second electronic switch is grounded, and a control end of the second electronic switch is connected to a second output pin of the control unit.

According to the second aspect, in a possible implementation, the first connection end, the second connection end, and the control end of the first electronic switch respectively correspond to a drain electrode, a source electrode, and a gate electrode of an N-channel MOS field-effect transistor. The first connection end, the second connection end, and the control end of the second electronic switch respectively correspond to a drain electrode, a source electrode, and a gate electrode of an N-channel MOS field-effect transistor.

According to a third aspect, an embodiment of this application discloses a vehicle, including a vehicle window. The vehicle further includes the vehicle window cleaning apparatus described in any one of the second aspect or the possible implementations of the second aspect.

### BRIEF DESCRIPTION OF DRAWINGS

FIG. 1 is a three-dimensional view of a vehicle according to an embodiment of this application;
FIG. 2 is a principle block diagram of a vehicle window cleaning apparatus according to an embodiment of this application;
FIG. 3 is a principle block diagram of a drive module according to an embodiment of this application;
FIG. 4 is a diagram of a circuit principle of a drive module according to an embodiment of this application;
FIG. 5 is a diagram of a circuit principle of a half-bridge drive unit according to another embodiment of this application;
FIG. 6 is a flowchart of a vehicle window cleaning method according to an embodiment of this application;
FIG. 7 is a schematic distribution diagram of a plurality of ultrasonic transducers according to an embodiment of this application;
FIG. 8 is a flowchart of a vehicle window cleaning method according to another embodiment of this application; and
FIG. 9 is a flowchart of a vehicle window cleaning method according to still another embodiment of this application.

### DESCRIPTION OF EMBODIMENTS

Embodiments of this application provide a vehicle and a vehicle window cleaning apparatus and a vehicle window cleaning method that are applied to the vehicle. The vehicle window cleaning apparatus and the vehicle window cleaning method are used to automatically clean a vehicle window. In the vehicle window cleaning apparatus and the vehicle window cleaning method, a vehicle window is detected by using a detection apparatus, and when it is detected that there is a foreign matter on the vehicle window, an ultrasonic transducer is controlled to work to automatically clean the vehicle window. This resolves a problem of high power consumption and low cleanliness that exist when wipers are used for cleaning on a vehicle in the conventional technology. The following describes embodiments of this application with reference to accompanying drawings.

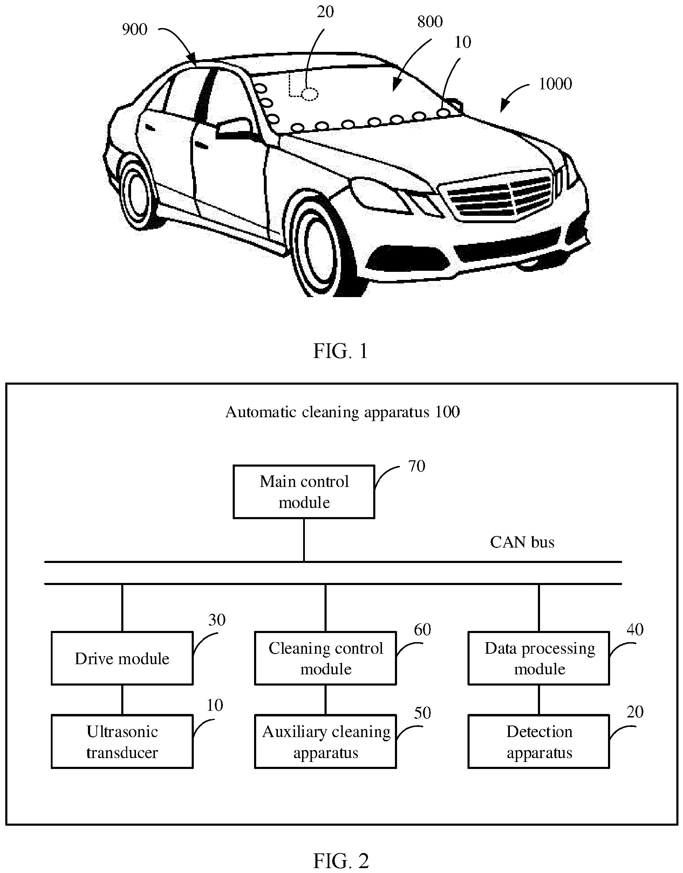

FIG. 1 is a three-dimensional view of a vehicle according to an embodiment of this application. The vehicle 1000 includes but is not limited to a car, a bus, a truck, a tractor, a train, and the like. This is not limited herein. The car, the bus, the truck, and the like may also be collectively referred to as automobiles. An automobile is used as an example for description in embodiments of this application.

As shown in FIG. 1, the vehicle 1000 includes a vehicle body 900 and glass 800 mounted on the vehicle body 900. It may be understood that, according to different positions at which the glass 800 is mounted on the vehicle body 900, front and rear windshields and side windows of the vehicle 1000 may be formed to meet requirements for daylighting, ventilation, and a vision field of a driver and a passenger in the vehicle.

The front and rear windshields of the automobile are usually curved glass that is favorable to the vision and beautiful, and are embedded in a window frame by using a sealing rubber strip or pasted on the window frame by using a special adhesive. For the convenience of natural ventilation, glass of the side windows of the automobile can usually be moved up and down or forward and backward. A sealing groove made of a material such as woolen or flocked rubber is mounted between the glass and a guide rail. Side windows of some automobiles are cylindrical glass that facilitates decoration of the automobiles.

In addition, a plurality of ultrasonic transducers 10 are disposed on the glass 800, and a detection apparatus 20 is further disposed in the vehicle 1000.

FIG. 2 is a principle block diagram of a vehicle window cleaning apparatus according to an embodiment of this application. The vehicle 1000 further includes a vehicle window cleaning apparatus 100 used in the vehicle 1000. The vehicle window cleaning apparatus 100 includes a plurality of ultrasonic transducers 10, a detection apparatus 20, a drive module 30, a data processing module 40, an auxiliary cleaning apparatus 50, a cleaning control module 60, and a main control module 70.

The ultrasonic transducer 10 is an apparatus for converting electric energy into a mechanical wave, and usually includes piezoelectric ceramics. When an impulse voltage at a corresponding frequency is added to the ultrasonic transducer 10, an internal piezoelectric wafer drives a vibration plate to vibrate to emit an ultrasonic wave. The ultrasonic wave is a sound wave with a frequency higher than 20 kHz. Through directional pressure of the ultrasonic wave, a water surface may bulge, and water molecules may be dispersed and evaporated. Similarly, periodic pressure reduction and compression interaction may be exerted on cleaning fluid. In this way, a strong mechanical impact force is generated around, so that stains on a glass surface are shaken off.

In addition, all components that can emit a sound wave and implement the foregoing functions may be referred to as ultrasonic transducers.

It can be learned based on the foregoing principles that the ultrasonic transducer 10 may be used to clean the glass. In addition, the glass can be cleaned back and forth due to a reflection feature of the ultrasonic wave, so that cleanliness can be improved. In this implementation, the plurality of ultrasonic transducers 10 are disposed at an edge of the glass 800, so that propagation directions of ultrasonic waves generated by the ultrasonic transducers 10 are parallel and close to a surface of the glass 800.

The drive module 30 is connected to the plurality of ultrasonic transducers 10, and is configured to generate an impulse voltage at a specific frequency to drive the plurality of ultrasonic transducers 10 to work normally to emit ultrasonic waves.

It should be noted that when a component is considered to be "connected" to another component, the component may be directly connected to the another component, or there may be an intermediate component between the two components. In addition, "connection" in embodiments of this application refers to an electrical connection.

The detection apparatus 20 is configured to detect cleaning information of the glass 800 to obtain detection information. The cleaning information indicates whether there is a foreign matter on the glass 800. The foreign matter includes but is not limited to a water flow (rainwater), stains, or the like. In this implementation of this application, the detection apparatus 20 is a camera, and the camera is configured to collect image information of the glass 800. The camera may be disposed inside the vehicle body 900 and aimed at the glass 800. In another implementation, the detection apparatus 20 may alternatively be an optical sensor, and determine, by detecting intensity of light on the glass 800, whether there is a foreign matter on the glass surface. It may be understood that, to improve detection precision, the vehicle window cleaning apparatus 100 may include a plurality of detection apparatuses.

The data processing module 40 is connected to the detection apparatus 20, and is configured to process the detection information to determine whether there is a foreign matter on the glass 800 and determine a type of the foreign matter. The data processing module 40 may be a processor. The processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, a discrete hardware component, or the like. The general-purpose processor may be a microprocessor, or the processor may be any conventional processor or the like.

The auxiliary cleaning apparatus 50 is configured to spray detergent on the glass 800 to facilitate falloff and removal of foreign matters. In this embodiment of this application, the auxiliary cleaning apparatus 50 is a detergent nozzle, and may be disposed at an edge of the glass 800.

The cleaning control module 60 is connected to the auxiliary cleaning apparatus 50, and is configured to control the auxiliary cleaning apparatus 50 to work. For example, the cleaning control module 60 may control a time of continuously spraying the detergent by the auxiliary cleaning apparatus 50 and a spraying amount. In addition, the cleaning control module 60 may further detect an amount of detergent in the auxiliary cleaning apparatus 50, and when the amount of detergent in the auxiliary cleaning apparatus 50 is less than a preset amount, send an alarm to remind a driver to add detergent in a timely manner. The cleaning control module 60 may be a processor, or may be a single-chip microcomputer.

The main control module 70 is communicatively connected to the drive module 30, the data processing module 40, and the cleaning control module 60, and is configured to receive information reported by the drive module 30, the data processing module 40, and the cleaning control module 60, and deliver a corresponding command to the drive module 30, the data processing module 40, and the cleaning control module 60. In this implementation, the main control module 70 is a body control module (BCM) of the vehicle 1000, and is communicatively connected to the drive module 30, the data processing module 40, and the cleaning control module 60 through a controller area network (Controller Area Network, CAN).

However, most of voltages provided by existing vehicle head units of the vehicle 1000 are low (for example, 12 V), and a working voltage of the ultrasonic transducer 10 is usually high (for example, higher than 100 V). Therefore, the voltage provided by the vehicle head unit needs to be processed to drive the ultrasonic transducer 10. The following describes in detail the drive module 30 configured to drive the ultrasonic transducer 10 in this embodiment of this application.

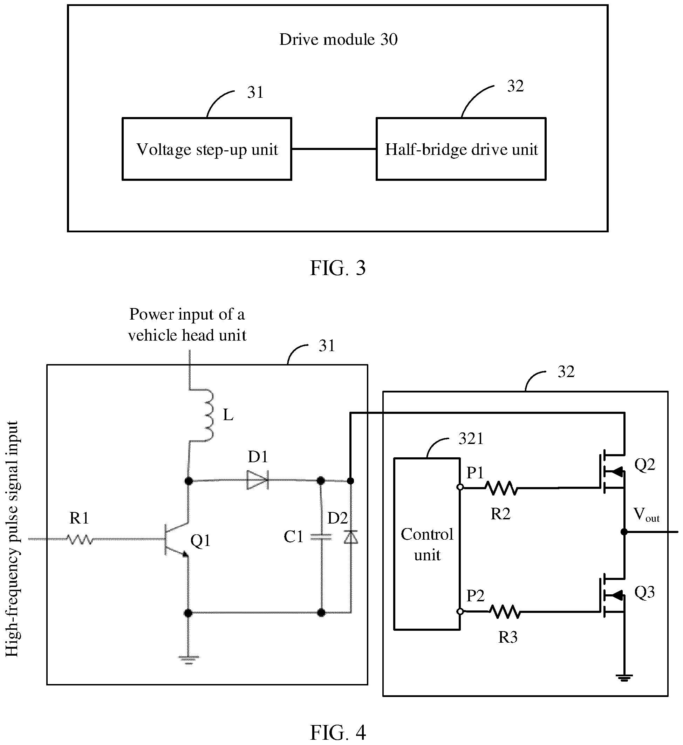

FIG. 3 is a principle block diagram of the drive module according to an embodiment of this application. The drive module 30 includes a voltage step-up unit 31 and a half-bridge drive unit 32. The voltage step-up unit 31 is configured to step up a voltage for a low-voltage direct current provided by a power supply of a vehicle head unit. The half-bridge drive unit 32 is connected to the voltage step-up unit 31, and is configured to convert a direct current obtained after the voltage step-up into a high impulse voltage at a frequency corresponding to the ultrasonic transducer 10 to ensure normal working of the ultrasonic transducer 10.

FIG. 4 is a diagram of a circuit principle of the drive module according to an embodiment of this application. As shown in FIG. 4, the voltage step-up unit 31 includes an inductor L, a control switch Q1, a first diode D1, a first capacitor C1, and a voltage stabilizing diode D2. A first end of the inductor L is connected to the power supply of the vehicle head unit, and a second end of the inductor L is connected to a first connection end of the control switch Q1. A second connection end of the control switch Q1 is grounded, and a control end of the control switch Q1 is connected to a generator of a high-frequency pulse signal and is configured to receive the high-frequency pulse signal. In a specific implementation, the control end of the control switch Q1 is connected to the generator of the high-frequency pulse signal through a first resistor R1. An anode of the first diode D1 is electrically connected between the second end of the inductor L and the first connection end of the control switch Q1, a cathode of the first diode D1 is grounded through the first capacitor C1, and the cathode of the first diode D1 is further connected to the half-bridge drive unit 32. A cathode of the voltage stabilizing diode D2 is connected to the cathode of the first diode D1, and an anode of the voltage stabilizing diode D2 is grounded.

In a possible implementation, the first connection end, the second connection end, and the control end of the control switch Q1 respectively correspond to a collector, an emitter, and a base of an NPN transistor.

The half-bridge drive unit 32 includes a control unit 321, a first electronic switch Q2, and a second electronic switch Q3. A first connection end of the first electronic switch Q2 is connected to the voltage step-up unit 31, a second connection end of the first electronic switch Q2 is connected to a first connection end of the second electronic switch Q3, and a control end of the first electronic switch Q2 is connected to a first output pin P1 of the control unit 321 through a second resistor R2. A second connection end of the second electronic switch Q3 is grounded, and a control end of the second electronic switch Q3 is connected to a second output pin P2 of the control unit 321 through a third resistor R3.

In a possible implementation, the first connection end, the second connection end, and the control end of the first electronic switch Q2 respectively correspond to a drain electrode, a source electrode, and a gate electrode of an N-channel MOS field-effect transistor. The first connection end, the second connection end, and the control end of the second electronic switch Q3 respectively correspond to a drain electrode, a source electrode, and a gate electrode of an N-channel MOS field-effect transistor.

The following describes a working principle of the drive module 30.

A circuit design of the voltage step-up unit 31 is mainly based on basic characteristics of energy storage and electric energy release of the first capacitor C1 and the inductor L. Turn-on and turn-off of the control switch Q1 can be controlled quickly by inputting a high-frequency pulse signal of 5 V at the control end of the control switch Q1. When the control end of the control switch Q1 is at a high electrical level, the control switch Q1 is turned on, and in this case, a current on the inductor L flows to the ground through the control switch Q1. When the control end of the control switch Q1 is at a low electrical level, the control switch Q1 is in a cut-off state. Because the current on the inductor L cannot change abruptly and maintains a state in a previous phase, the current cannot flow to the ground. Therefore, the first capacitor C1 is charged. As the charging proceeds, the current on the inductor L decreases gradually, and voltages at both ends of the first capacitor C1 increases gradually. When the control end of the control switch Q1 is at a high electrical level again, the control switch Q1 is turned on, the inductor L stops charging, and a large current is generated on the inductor L again. Due to the function of the first diode D1, the first capacitor C1 cannot discharge. When the control end of the control switch Q1 is at a low electrical level next time, the inductor L continues to charge the first capacitor C1. The foregoing steps are repeated. After a very short period of time, the first capacitor C1 is fully charged and remains basically stable, that is, a voltage on the first capacitor C1 remains basically unchanged. In addition, due to the function of the voltage stabilizing diode D2, the voltage on the first capacitor C1 can be stabilized at an appropriate value.

The voltage on the first capacitor C1 is input to the half-bridge drive unit 32 through the first connection end of the first electronic switch Q2. When the control unit 321 controls the first output pin P1 to output a high electrical level, the first electronic switch Q2 is turned on, and Vₒᵤₜ outputs a high voltage (the voltage of the first capacitor C1). When the control unit 321 controls the second output pin P2 to output a high electrical level, the second electronic switch Q3 is turned on, and Vₒᵤₜ outputs a low voltage (which is basically close to a ground potential). In this way, the control unit 321 controls the first output pin P1 and the second output pin P2 to alternately output high electrical levels, to enable Vₒᵤₜ to output a high-frequency impulse voltage.

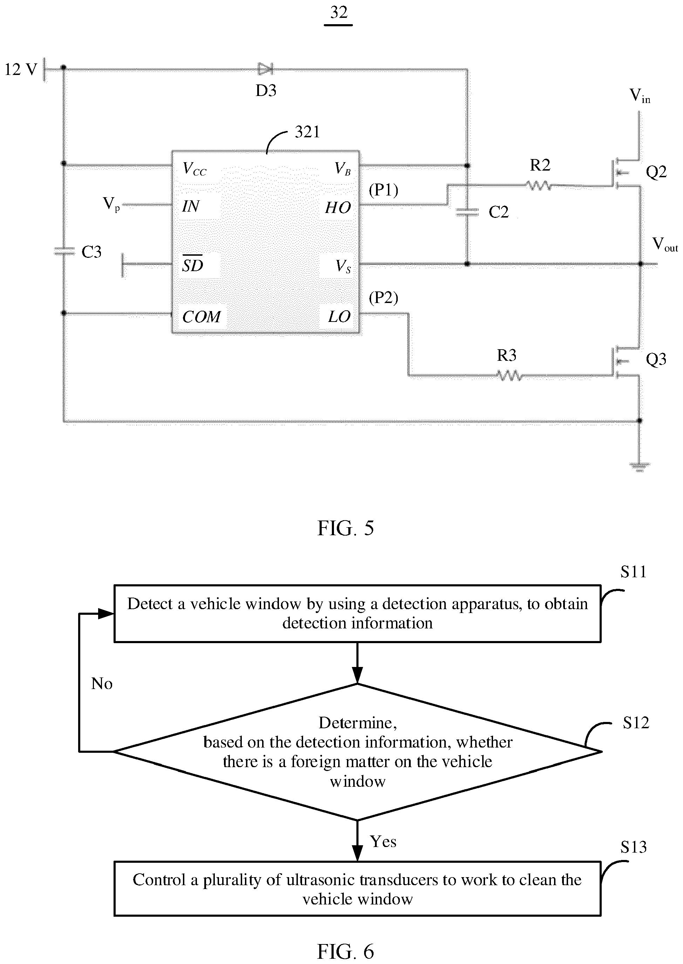

FIG. 5 is a diagram of a circuit principle of the half-bridge drive unit according to another embodiment of this application. In this implementation of this application, the control unit 321 is described by using a chip whose model is IR2104S as an example. As shown in FIG. 5, the chip supplies power of 12 V. Vᵢₙ is an input end of a high-voltage direct current signal, and is configured to receive a high-voltage direct current that is output by the voltage step-up unit 31. HO is a high voltage end driven output (the same as the first output pin P1 in FIG. 4), and LO is a low voltage end driven output (the same as the second output pin P2 in FIG. 4). When HO is at a high electrical level, the first electronic switch Q2 is turned on, and Vₒᵤₜ outputs a high voltage. When LO is at a high electrical level, the second electronic switch Q3 is turned on, and Vₒᵤₜ outputs a low voltage.

It should be noted that, a second diode D3 in this implementation is an important bootstrap component, and can block a high voltage generated in a circuit. To reduce a charge loss, the second diode D3 in this implementation is an IN4007 fast-recovery diode. A second capacitor C2 is also a bootstrap component, and is mainly used to provide a high voltage inside the chip, to ensure that there is sufficient energy supply for a high-voltage circuit. In addition, a frequency of an impulse voltage that is output by Vₒᵤₜ may be further controlled by using a pin Vₚ, so that ultrasonic transducers 10 at different frequencies can be driven. This improves adaptability of the drive module 30.

In the foregoing embodiments, although functions of modules of the vehicle window cleaning apparatus 100 are described, how to control the plurality of ultrasonic transducers 10 to automatically clean the glass 800 to achieve effects of reducing power consumption and improving cleanliness is still a research focus of this application. Therefore, an embodiment of this application further provides a vehicle window cleaning method, and the vehicle window cleaning method is applied to the foregoing vehicle 1000. It may be understood that application of the vehicle window cleaning method in this embodiment of this application to the foregoing vehicle 1000 is merely an example. The automatic cleaning method may be further used to clean glass on a building (for example, a house), or may be used to automatically clean a surface of a vehicle body. This is not limited herein.

FIG. 6 is a flowchart of a vehicle window cleaning method according to an embodiment of this application. The vehicle window cleaning method includes the following steps.

Step S11: Detect a vehicle window by using a detection apparatus, to obtain detection information.

In an implementation, the detection apparatus 20 is a camera, and the detection information is image information of the vehicle window. Step S11 is specifically: The data processing module 40 performs image acquisition on the vehicle window by using the camera to obtain the image information.

The camera includes but is not limited to an infrared camera, a depth camera, an RGB sensor, a structured light sensor, or the like. The image information is an image obtained by detecting the vehicle window by using the camera. In this implementation of this application, to improve precision of capturing an image of the vehicle window when the vehicle 1000 travels at night, the camera is an infrared camera.

In this implementation of this application, the vehicle window is a front windshield of the vehicle 1000, and the camera may be disposed in the vehicle body 900 and aimed at the front windshield. It may be understood that, to improve precision of capturing the image of the vehicle window, a plurality of cameras may be disposed to obtain images of the vehicle window from different angles of view.

Step S12: Determine, based on the detection information, whether there is a foreign matter on the vehicle window. If there is a foreign matter on the vehicle window, step S13 is performed. If there is no foreign matter on the vehicle window, step S11 is performed.

In an implementation, the data processing module 40 is configured to input the image information into a neural network classification model, to determine whether there is a foreign matter on the vehicle window. A foreign matter training set may be collected in advance, and the collected training set is input into a neural network for training, to obtain the neural network classification model.

In another implementation, when determining that a quantity of foreign matters on the vehicle window is greater than a preset threshold, the data processing module 40 determines that there is a foreign matter on the vehicle window. In this way, unnecessary energy consumption caused by mistaken determining can be avoided.

Step S13: Control a plurality of ultrasonic transducers to work to clean the vehicle window.

Specifically, the data processing module 40 sends a result of determining that there is a foreign matter on the vehicle windows to the main control module 70, and the main control module 70 controls the plurality of ultrasonic transducers 10 to work to clean the vehicle window.

Generally, if the foreign matter is an ordinary foreign matter, after the plurality of ultrasonic transducers 10 work for a period of time, the foreign matter should be cleaned completely. Therefore, to reduce energy consumption and avoid a case in which the plurality of ultrasonic transducers 10 continue to work after the foreign matter is cleaned completely, in an implementation, the main control module 70 controls the drive module 30 to drive the plurality of ultrasonic transducers 10 to work to clean the vehicle window, and after a preset time period, controls the plurality of ultrasonic transducers 10 to stop working.

However, it is also possible that the foreign matter still exists after the plurality of ultrasonic transducers 10 work for a preset time period. Therefore, to improve cleanliness of the vehicle window, in another implementation, after the plurality of ultrasonic transducers 10 are controlled to work for a preset time period, the data processing module 40 further determines whether the foreign matter on the vehicle window is cleaned completely; and if the foreign matter on the vehicle window is cleaned completely, the main control module 70 controls the plurality of ultrasonic transducers 10 to stop working; or if the foreign matter on the vehicle window is not cleaned completely, the main control module 70 controls the plurality of ultrasonic transducers 10 to continue working until the foreign matter is cleaned completely.

A method for determining, by the data processing module 40, whether the foreign matter on the vehicle window is cleaned completely may be implemented by repeating the foregoing step S11 and step S12. Certainly, another manner (for example, a humidity sensor or an optical sensor) may alternatively be used for implementation. This is not limited herein.

In addition, to avoid mistaken determining, the data processing module 40 may perform step S11 and step S12 a plurality of times to determine whether there is a foreign matter on the vehicle window. If it is determined, in more than a preset quantity of times (for example, three times) of performing the steps, that there is no foreign matter on the vehicle window, it may be determined that the foreign matter is cleaned completely.

According to the vehicle window cleaning method in this embodiment of this application, because the plurality of ultrasonic transducers 10 are used to replace conventional wipers, no friction exists when the vehicle window is cleaned. This reduces an energy loss. In addition, because a propagation direction of an ultrasonic wave generated by the ultrasonic transducer 10, which is disposed at an edge of the vehicle window, is parallel and close to a surface of the vehicle window, the driver's vision is not blocked. Moreover, the vehicle window can be cleaned back and forth due to a reflection feature of the ultrasonic wave, so that cleanliness is improved. This resolves a problem of high power consumption and low cleanliness that exist when wipers are used for cleaning on a vehicle in the conventional technology.

It may be understood that, to implement complete cleaning of the vehicle window, usually, a plurality of ultrasonic transducers 10 should be disposed in a spaced manner at one or more edges of the vehicle window, so that ultrasonic waves emitted by the ultrasonic transducers 10 during working can cover the entire surface of the vehicle window. In a specific implementation, to improve cleanliness and reduce costs, ultrasonic transducers 10 are disposed at the two edges of the vehicle window that intersect.

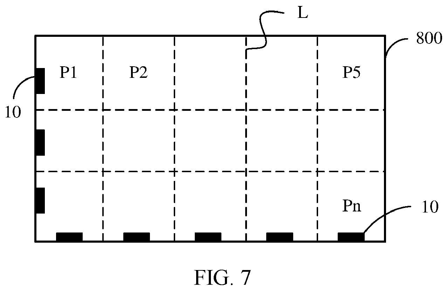

Specifically, FIG. 7 is a schematic distribution diagram of a plurality of ultrasonic transducers according to an embodiment of this application. As shown FIG. 7, the plurality of ultrasonic transducers 10 are separately arranged in a first direction and a second direction along edges of the vehicle window, and the first direction and the second direction intersect. In this embodiment of this application, the first direction is approximately perpendicular to the second direction. According to distribution locations of the ultrasonic transducers 10, the data processing module 40 divides the vehicle window into several areas P based on non-division lines L between adjacent ultrasonic transducers 10 in the first direction and the second direction and intersection points of the non-division lines L, where each area P corresponds to at least one ultrasonic transducer 10 in the first direction and at least one ultrasonic transducer 10 in the second direction. In this way, foreign matters are sequentially arranged as a training sample based on the areas, and several training sets are collected; and then the obtained training sets are input into the constructed neural network to obtain the neural network classification model.

To clean the vehicle window completely, several ultrasonic transducers 10 are usually disposed at the edge of the vehicle window, so that the vehicle window can be completely cleaned when all the ultrasonic transducers 10 work. However, if the foreign matter on the vehicle window exists in only a specific place on the vehicle window, a waste of energy is caused if all the ultrasonic transducers 10 are controlled to work. Therefore, based on distribution of the plurality of ultrasonic transducers 10 in FIG. 7 and area division of the vehicle window, an embodiment of this application further provides another vehicle window cleaning method to further reduce energy consumption.

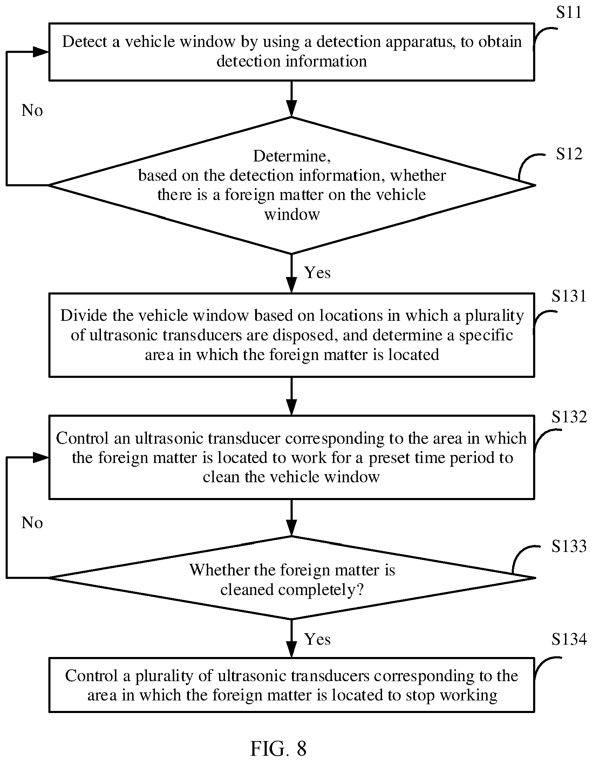

FIG. 8 is a flowchart of a vehicle window cleaning method according to another embodiment of this application. As shown in FIG. 8, in this implementation of this application, step S13 in FIG. 6 specifically includes the following steps.

Step S131: Divide the vehicle window based on locations in which the plurality of ultrasonic transducers are disposed, and determine a specific area in which the foreign matter is located.

When it is determined that there is a foreign matter on the vehicle window, a location of the foreign matter further needs to be determined. For example, an area in which the foreign matter is specifically located in FIG. 7 needs to be determined. In this implementation, the data processing module 40 divides the vehicle window based on the locations in which the plurality of ultrasonic transducers 10 are disposed, and determines the specific area in which the foreign matter is located.

Step S132: Control an ultrasonic transducer corresponding to the area in which the foreign matter is located to work for a preset time period to clean the vehicle window.

In this way, only the ultrasonic transducer 10 corresponding to the area in which the foreign matter is located needs to be enabled to work, so that energy consumption can be reduced. Specifically, the main control module 70 controls at least one or all of the ultrasonic transducers 10 that are in the first direction and the second direction and that are corresponding to the area in which the foreign matter is located to work to clean the vehicle window.

Step S133: Determine whether the foreign matter is cleaned completely. If the foreign matter is cleaned completely, step S134 is performed. If the foreign matter is not cleaned completely, step S132 is performed.

Specifically, the data processing module 40 determines, based on the collected image information, whether the foreign matter is cleaned completely. It may be understood that, in some implementations, this step (S132) may alternatively be omitted, that is, the ultrasonic transducer 10 may be turned off after the ultrasonic transducer 10 works for a preset time period. In this way, working efficiency of a system can be improved.

Step S134: Control the ultrasonic transducer corresponding to the area in which the foreign matter is located to stop working.

Specifically, the main control module 70 controls all of the ultrasonic transducers 10 that are in the first direction and the second direction and that are corresponding to the area in which the foreign matter is located to stop working.

In the foregoing embodiment, only whether there is a foreign matter on the vehicle window is determined, but a type of the foreign matter is not determined. It may be understood that, the foreign matter on the front windshield of the vehicle 1000 is usually rainwater. Therefore, cleaning can be directly performed as long as the ultrasonic transducer 10 is enabled to work. However, sometimes there may be foreign matters other than rainwater, such as mud spots or oil stains. These types of foreign matters may not be cleaned completely by enabling the ultrasonic transducer 10 to work, and need to be cleaned completely by spraying detergent. Therefore, an embodiment of this application further provides another vehicle window cleaning method to further improve cleanliness.

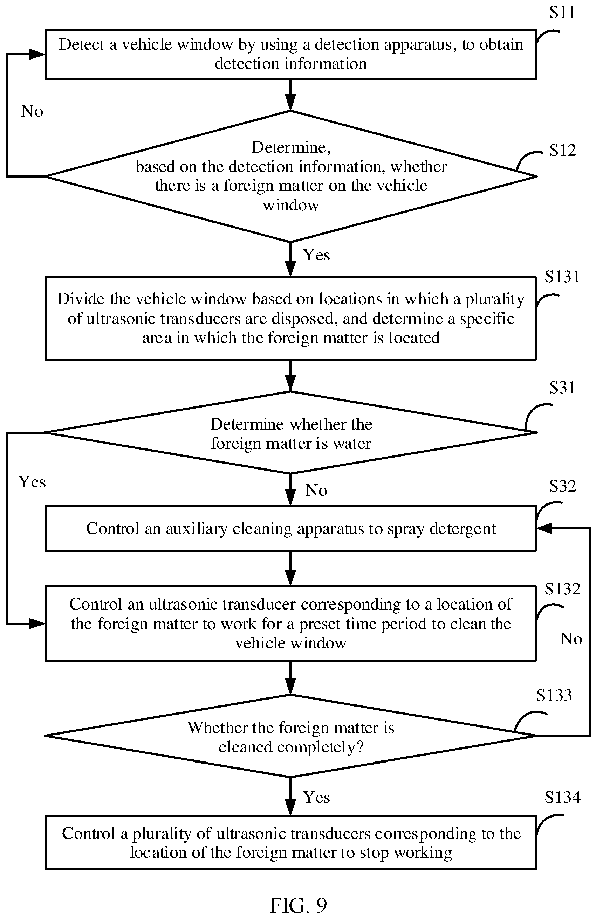

FIG. 9 is a flowchart of a vehicle window cleaning method according to still another embodiment of this application. As shown in FIG. 9, a difference between the vehicle window cleaning method in this embodiment of this application and the vehicle window cleaning method in FIG. 8 lies in that the vehicle window cleaning method in this embodiment of this application further includes the following steps.

Step S31: Determine whether the foreign matter is water. If the foreign matter is water, step S132 is performed. If the foreign matter is not water, step S32 is performed.

In this implementation of this application, foreign matters are classified into two types: water and non-water. Specifically, the data processing module 40 determines, based on the neural network classification model, whether the foreign matter is water. In this implementation, the neural network classification model is obtained by inputting several training sets into a constructed neural network for training, and the several training sets are obtained by classifying foreign matters into two types: water and non-water, selecting objects of a same type, and sequentially arranging the objects as a training sample based on each area assigned a unique value.

Step S32: Control the auxiliary cleaning apparatus to spray detergent.

When the foreign matter is a non-water foreign matter, the main control module 70 controls, by using the cleaning control module 60, the auxiliary cleaning apparatus 50 to spray detergent, and then step S131 is performed to clean the foreign matter.

In this embodiment of this application, if the data processing module 40 determines that the foreign matter is not cleaned completely, step S32 is performed again.

In addition, it should be noted that the vehicle window cleaning method in each embodiment of this application is performed only when the vehicle 1000 is in use, that is, an ignition switch of the vehicle 1000 is enabled. In this way, automatic cleaning when the vehicle 1000 is not in use can be avoided. This reduces energy consumption.

It may be clearly understood by a person skilled in the art that, for the purpose of convenient and brief description, for a detailed working process of the foregoing module, refer to a corresponding process in the foregoing method embodiments, and details are not described herein again.

It should be noted that, for brief description, the foregoing method embodiments are represented as a series of actions. However, a person skilled in the art should learn that this application is not limited to the described order of the actions, because according to this application, some steps may be performed in other orders or simultaneously.

In the foregoing embodiments, the description of each embodiment has respective focuses. For a part that is not described in detail in an embodiment, refer to related descriptions in other embodiments.

A sequence of the steps of the method in embodiments of this application may be adjusted, combined, or removed based on an actual requirement.

The implementations of this application may be randomly combined to achieve different technical effects.

All or some of the foregoing embodiments may be implemented by using software, hardware, firmware, or any combination thereof. When software is used to implement the embodiments, the embodiments may be implemented entirely or partially in a form of a computer program product. The computer program product includes one or more computer instructions. When the computer program instructions are loaded and executed on the computer, all or some of the procedures or functions in this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk)), or the like.

## Claims

1. A vehicle window cleaning method, wherein a plurality of ultrasonic transducers (10) are disposed on a vehicle window, and the cleaning method comprises:
detecting the vehicle window to obtain detection information; and
when determining, based on the detection information, that there is a foreign matter on the vehicle window, controlling the plurality of ultrasonic transducers (10) to work to clean the vehicle window,
**characterized in that** the controlling the plurality of ultrasonic transducers (10) to work to clean the vehicle window comprises:
dividing the vehicle window based on locations in which the plurality of ultrasonic transducers (10) are disposed;
determining a specific area in which the foreign matter is located; and
controlling an ultrasonic transducer (10) corresponding to the area in which the foreign matter is located to work to clean the glass.

2. The vehicle window cleaning method according to claim 1, wherein the plurality of ultrasonic transducers (10) are separately arranged in a first direction and a second direction along edges of the vehicle window, and the first direction and the second direction intersect;
the dividing the vehicle window based on locations in which the plurality of ultrasonic transducers (10) are disposed comprises:
dividing the glass into several areas based on division lines between adjacent ultrasonic transducers (10) in the first direction and the second direction and an intersection point of the division lines, wherein each area is corresponding to at least one ultrasonic transducer (10) in the first direction and at least one ultrasonic transducer (10) in the second direction; and
the controlling an ultrasonic transducer (10) corresponding to the area in which the foreign matter is located to work to clean the glass comprises:
controlling ultrasonic transducers (10) that are in the first direction and the second direction and that are corresponding to the area in which the foreign matter is located to work to clean the vehicle window.

3. The vehicle window cleaning method according to claim 1, wherein after the cleaning the vehicle window, the vehicle window cleaning method further comprises:
determining whether the area in which the foreign matter is located is clean after cleaning; and
when determining that the area in which the foreign matter is located is clean after cleaning, controlling the ultrasonic transducer (10) corresponding to the area in which the foreign matter is located to stop working.

4. The vehicle window cleaning method according to any one of claims 1 to 3, wherein the detection information is image information, and the determining a specific area in which the foreign matter is located comprises:
determining, based on the image information and a neural network classification model, the specific area in which the foreign matter is located.

5. The vehicle window cleaning method according to claim 4, wherein before the cleaning the vehicle window, the vehicle window cleaning method further comprises:
determining, based on the neural network classification model, whether the foreign matter is water; and
spraying detergent when determining that the foreign matter is not water.

6. The vehicle window cleaning method according to claim 5, wherein the neural network classification model is obtained by inputting several training sets into a constructed neural network for training, and the several training sets are obtained by classifying foreign matters into two types: water and non-water, selecting objects of a same type, and sequentially arranging the objects as a training sample based on each area assigned a unique value.

7. A vehicle window cleaning apparatus, comprising:
a detection apparatus (20), configured to detect cleaning information of a vehicle window to obtain detection information;
a data processing module (40), configured to process the detection information to determine whether there is a foreign matter on the vehicle window;
a plurality of ultrasonic transducers (10), disposed on the vehicle window;
a drive module (30), configured to generate an impulse voltage to drive the plurality of ultrasonic transducers (10) to work; and
a main control module (70), connected to the data processing module (40) and the drive module (30), and configured to: when it is determined that there is a foreign matter on the vehicle window, control the drive module (30) to drive the plurality of ultrasonic transducers (10) to work to clean the vehicle window,
**characterized in that** the data processing module (40) is configured to divide the vehicle window based on locations in which the plurality of ultrasonic transducers (10) are disposed, and determine a specific area in which the foreign matter is located; and the main control module (70) is configured to control the drive module (30) to drive an ultrasonic transducer (10) corresponding to the area in which the foreign matter is located to work to clean the vehicle window.

8. The vehicle window cleaning apparatus according to claim 7, wherein the plurality of ultrasonic transducers (10) are separately arranged in a first direction and a second direction along edges of the vehicle window, and the first direction and the second direction intersect; the data processing module (40) divides the vehicle window into several areas based on division lines between adjacent ultrasonic transducers (10) in the first direction and the second direction and an intersection point of the division lines, wherein each area is corresponding to at least one ultrasonic transducer (10) in the first direction and at least one ultrasonic transducer (10) in the second direction; and the main control module (70) is configured to control ultrasonic transducers (10) that are in the first direction and the second direction and that are corresponding to the area in which the foreign matter is located to work to clean the vehicle window.

9. The vehicle window cleaning apparatus according to claim 8, wherein after the main control module (70) controls the drive module (30) to drive the ultrasonic transducer (10) corresponding to the area in which the foreign matter is located to work to clean the vehicle window, the data processing module (40) is further configured to determine whether the area in which the foreign matter is located is clean after cleaning; and the main control module (70) is further configured to: when it is determined that the area in which the foreign matter is located is clean after cleaning, control the drive module (30) to drive the ultrasonic transducer (10) corresponding to the area in which the foreign matter is located to stop working.

10. The vehicle window cleaning apparatus according to any one of claims 7 to 9, wherein the detection apparatus (20) is a camera; the detection information is image information; and the data processing module (40) is specifically configured to determine, based on the image information and a neural network classification model, the specific area in which the foreign matter is located.

11. The vehicle window cleaning apparatus according to claim 10, wherein the vehicle window cleaning apparatus further comprises an auxiliary cleaning apparatus (50) and a cleaning control module (60); the main control module (70) is further connected to the cleaning control module (60); the data processing module (40) is further configured to determine, based on the neural network classification model, whether the foreign matter is water; and the main control module (70) is further configured to: when it is determined that the foreign matter is not water, control, by using the cleaning control module (60), the auxiliary cleaning apparatus (50) to spray detergent.

12. The vehicle window cleaning apparatus according to claim 7, wherein the drive module (30) comprises:
a voltage step-up unit (31), configured to step up a voltage for a low-voltage direct current provided by a power supply of a vehicle head unit; and
a half-bridge drive unit (32), connected to the voltage step-up unit (31), and configured to convert a direct current obtained after the voltage step-up into a high impulse voltage at a frequency corresponding to the ultrasonic transducer (10).

13. A vehicle, comprising a vehicle window, wherein the vehicle further comprises the vehicle window cleaning apparatus according to any one of claims 7 to 12

## Patentansprüche

1. Fahrzeugfensterreinigungsverfahren, wobei eine Vielzahl von Ultraschallwandlern (10) an einem Fahrzeugfenster angeordnet ist und das Reinigungsverfahren umfasst:
Detektieren des Fahrzeugfensters zum Erhalten von Detektionsinformationen und wenn bestimmt wird, basierend auf den Detektionsinformationen, dass ein Fremdkörper am Fahrzeugfenster ist, Steuern der Vielzahl von Ultraschallwandlern (10), sodass sie zum Reinigen des Fahrzeugfensters arbeitet,
**dadurch gekennzeichnet, dass** das Steuern der Vielzahl von Ultraschallwandlern (10), sodass sie zum Reinigen des Fahrzeugfensters arbeitet, umfasst:
Teilen des Fahrzeugfensters basierend auf Stellen, in denen die Vielzahl von Ultraschallwandlern (10) angeordnet ist;
Bestimmen eines spezifischen Bereichs, in dem sich der Fremdkörper befindet, und Steuern eines Ultraschallwandlers (10) entsprechend dem Bereich, in dem sich der Fremdkörper befindet, sodass er zum Reinigen des Glases arbeitet.

2. Fahrzeugfensterreinigungsverfahren nach Anspruch 1, wobei die Vielzahl von Ultraschallwandlern (10) in einer ersten Richtung und einer zweiten Richtung entlang Kanten des Fahrzeugfensters getrennt angeordnet ist und sich die erste Richtung und die zweite Richtung schneiden,
wobei das Teilen des Fahrzeugfensters basierend auf Stellen, in denen die Vielzahl von Ultraschallwandlern (10) angeordnet ist, umfasst:
Teilen des Glases in verschiedene Bereiche basierend auf Teilungslinien zwischen benachbarten Ultraschallwandlern (10) in der ersten Richtung und der zweiten Richtung und einem Schnittpunkt der Teilungslinien, wobei jeder Bereich zumindest einem Ultraschallwandler (10) in der ersten Richtung und zumindest einem Ultraschallwandler (10) in der zweiten Richtung entspricht; und
wobei das Steuern eines Ultraschallwandlers (10) entsprechend dem Bereich, in dem sich der Fremdkörper befindet, sodass er zum Reinigen des Glases arbeitet, umfasst:
Steuern der Ultraschallwandler (10), die in der ersten Richtung und der zweiten Richtung sind und die dem Bereich entsprechen, in dem sich der Fremdkörper befindet, sodass sie zum Reinigen des Fahrzeugfensters arbeiten.

3. Fahrzeugfensterreinigungsverfahren nach Anspruch 1, wobei, nach dem Reinigen des Fahrzeugfensters, das Fahrzeugfensterreinigungsverfahren ferner umfasst:
Bestimmen, ob der Bereich, in dem sich der Fremdkörper befindet, nach dem Reinigen sauber ist; und
wenn bestimmt wird, dass der Bereich, in dem sich der Fremdkörper befindet, nach dem Reinigen sauber ist, Steuern des Ultraschallwandlers (10) entsprechend dem Bereich, in dem sich der Fremdkörper befindet, sodass er das Arbeiten stoppt.

4. Fahrzeugfensterreinigungsverfahren nach einem der Ansprüche 1 bis 3, wobei die Detektionsinformationen Bildinformationen sind und das Bestimmen eines spezifischen Bereichs, in dem sich der Fremdkörper befindet, umfasst:
Bestimmen, basierend auf den Bildinformationen und einem Klassifizierungsmodell eines neuronalen Netzwerks, des spezifischen Bereichs, in dem sich der Fremdkörper befindet.

5. Fahrzeugfensterreinigungsverfahren nach Anspruch 4, wobei vor dem Reinigen des Fahrzeugfensters das Fahrzeugfensterreinigungsverfahren ferner umfasst:
Bestimmen, basierend auf dem Klassifizierungsmodell eines neuronalen Netzwerks, ob der Fremdkörper Wasser ist, und
Sprühen eines Waschmittels, wenn bestimmt wird, dass der Fremdkörper nicht Wasser ist.

6. Fahrzeugfensterreinigungsverfahren nach Anspruch 5, wobei das Klassifizierungsmodell eines neuronalen Netzwerks durch Eingeben mehrerer Trainingssätze in ein erstelltes neuronales Netzwerk zum Training erhalten wird und die mehreren Trainingssätze durch Klassifizieren von Fremdkörpern in zwei Typen: Wasser und Nicht-Wasser, Auswählen von Objekten eines gleichen Typs und sequentielles Anordnen der Objekte als ein Trainings-Sample basierend auf jedem Bereich, dem ein eindeutiger Wert zugewiesen ist, erhalten werden.

7. Fahrzeugfensterreinigungsvorrichtung, umfassend:
eine Detektionsvorrichtung (20), die zum Detektieren von Reinigungsinformationen eines Fahrzeugfensters zum Erhalten von Detektionsinformationen ausgelegt ist;
ein Datenverarbeitungsmodul (40), das zum Verarbeiten der Detektionsinformationen zum Bestimmen, ob ein Fremdkörper am Fahrzeugfenster ist, ausgelegt ist;
eine Vielzahl von Ultraschallwandlern (10), die am Fahrzeugfenster angeordnet ist;
ein Ansteuermodul (30), das zum Erzeugen einer Impulsspannung zum Ansteuern der Vielzahl von Ultraschallwandlern (10) zum Arbeiten ausgelegt ist; und
ein Hauptsteuermodul (70), das mit dem Datenverarbeitungsmodul (40) und dem Ansteuermodul (30) verbunden ist und ausgelegt ist zum: wenn bestimmt wird, dass ein Fremdkörper am Fahrzeugfenster ist, Steuern des Ansteuermoduls (30) zum Ansteuern der Vielzahl von Ultraschallwandlern (10), sodass sie zum Reinigen des Fahrzeugfensters arbeitet,
**dadurch gekennzeichnet, dass** das Datenverarbeitungsmodul (40) zum Teilen des Fahrzeugfensters basierend auf Stellen, in denen die Vielzahl von Ultraschallwandlern (10) angeordnet ist, und Bestimmen eines spezifischen Bereichs, in dem sich der Fremdkörper befindet, ausgelegt ist; und das Hauptsteuermodul (70) zum Steuern des Ansteuermoduls (30) zum Ansteuern eines Ultraschallwandlers (10) entsprechend dem Bereich, in dem sich der Fremdkörper befindet, sodass er zum Reinigen des Fahrzeugfensters arbeitet, ausgelegt ist.

8. Fahrzeugfensterreinigungsvorrichtung nach Anspruch 7, wobei die Vielzahl von Ultraschallwandlern (10) in einer ersten Richtung und einer zweiten Richtung entlang Kanten des Fahrzeugfensters getrennt angeordnet ist und sich die erste Richtung und die zweite Richtung schneiden, das Datenverarbeitungsmodul (40) das Fahrzeugfenster in mehrere Bereiche basierend auf Teilungslinien zwischen benachbarten Ultraschallwandlern (10) in der ersten Richtung und der zweiten Richtung und einem Schnittpunkt der Teilungslinien teilt, wobei jeder Bereich zumindest einem Ultraschallwandler (10) in der ersten Richtung und zumindest einem Ultraschallwandler (10) in der zweiten Richtung entspricht und das Hauptsteuermodul (70) zum Steuern von Ultraschallwandlern (10), die in der ersten Richtung und der zweiten Richtung sind und die dem Bereich, in dem sich der Fremdkörper befindet, entsprechen, sodass sie zum Reinigen des Fahrzeugfensters arbeiten, ausgelegt ist.

9. Fahrzeugfensterreinigungsvorrichtung nach Anspruch 8, wobei, nachdem das Hauptsteuermodul (70) das Ansteuermodul (30) zum Ansteuern des Ultraschallwandlers (10) entsprechend dem Bereich, in dem sich der Fremdkörper befindet, sodass er zum Reinigen des Fahrzeugfensters arbeitet, steuert, das Datenverarbeitungsmodul (40) ferner zum Bestimmen, ob der Bereich, in dem sich der Fremdkörper befindet, nach dem Reinigen sauber ist, ausgelegt ist und das Hauptsteuermodul (70) ferner ausgelegt ist zum: wenn bestimmt wird, dass der Bereich, in dem sich der Fremdkörper befindet, nach dem Reinigen sauber ist, Steuern des Ansteuermoduls (30) zum Ansteuern des Ultraschallwandlers (10) entsprechend dem Bereich, in dem sich der Fremdkörper befindet, sodass er das Arbeiten stoppt.

10. Fahrzeugfensterreinigungsvorrichtung nach einem der Ansprüche 7 bis 9, wobei die Detektionsvorrichtung (20) eine Kamera ist, die Detektionsinformationen Bildinformationen sind und das Datenverarbeitungsmodul (40) insbesondere zum Bestimmen, basierend auf den Bildinformationen und einem Klassifizierungsmodell eines neuronalen Netzwerks, des spezifischen Bereichs, in dem sich der Fremdkörper befindet, ausgelegt ist.

11. Fahrzeugfensterreinigungsvorrichtung nach Anspruch 10, wobei die Fahrzeugfensterreinigungsvorrichtung ferner eine Hilfsreinigungsvorrichtung (50) und ein Reinigungssteuermodul (60) umfasst, das Hauptsteuermodul (70) ferner mit dem Reinigungssteuermodul (60) verbunden ist; das Datenverarbeitungsmodul (40) ferner zum Bestimmen, basierend auf dem Klassifizierungsmodell eines neuronalen Netzwerks, ob der Fremdkörper Wasser ist, ausgelegt ist und das Hauptsteuermodul (70) ferner ausgelegt ist zum: wenn bestimmt wird, dass der Fremdkörper nicht Wasser ist, Steuern, durch Verwenden des Reinigungssteuermoduls (60), der Hilfsreinigungsvorrichtung (50) zum Sprühen von Waschmittel.

12. Fahrzeugfensterreinigungsvorrichtung nach Anspruch 7, wobei das Ansteuermodul (30) umfasst:
eine Spannungshochtransformationseinheit (31), die zum Hochtransformieren einer Spannung für einen Niederspannungsgleichstrom, der durch eine Stromversorgung einer Fahrzeug-"Head-Unit" bereitgestellt wird, ausgelegt ist und
eine Halbbrückenansteuereinheit (32), die mit der Spannungshochtransformationseinheit (31) verbunden und zum Umwandeln eines Gleichstroms, der nach der Spannungshochtransformation in eine hohe Impulsspannung bei einer Frequenz entsprechend dem Ultraschallwandler (10) erhalten wird, ausgelegt ist.

13. Fahrzeug, das ein Fahrzeugfenster umfasst, wobei das Fahrzeug ferner eine Fahrzeugfensterreinigungsvorrichtung nach einem der Ansprüche 7 bis 12 umfasst.

## Revendications

1. Procédé de nettoyage de vitre de véhicule, dans lequel une pluralité de transducteurs ultrasoniques (10) sont disposés sur une vitre de véhicule, et le procédé de nettoyage comprend :
le fait de détecter la vitre de véhicule afin d'obtenir des informations de détection ; et
lors de la détermination, sur la base des informations de détection, qu'une matière étrangère est présente sur la vitre de véhicule, le fait de commander à la pluralité de transducteurs ultrasoniques (10) de fonctionner pour nettoyer la vitre de véhicule,
**caractérisé en ce que** le fait de commander à la pluralité de transducteurs ultrasoniques (10) de fonctionner pour nettoyer la vitre de véhicule comprend :
le fait de diviser la vitre de véhicule, sur la base d'emplacements dans lesquels la pluralité de transducteurs ultrasoniques (10) sont disposés ;
le fait de déterminer une zone spécifique dans laquelle se trouve la matière étrangère ; et
le fait de commander à un transducteur ultrasonique (10), correspondant à la zone dans laquelle se trouve la matière étrangère, de fonctionner pour nettoyer la vitre.

2. Procédé de nettoyage de vitre de véhicule selon la revendication 1, dans lequel la pluralité de transducteurs ultrasoniques (10) sont agencés séparément dans une première direction et une deuxième direction le long des bords de la vitre de véhicule, et les première et deuxième directions s'entrecoupent ;
le fait de diviser la vitre de véhicule, sur la base d'emplacements dans lesquels la pluralité de transducteurs ultrasoniques (10) sont disposés, comprend :
le fait de diviser le verre en plusieurs zones sur la base de lignes de division entre des transducteurs ultrasoniques adjacents (10) dans la première direction et la deuxième direction et d'un point d'intersection des lignes de division, dans lequel chaque zone correspond à au moins un transducteur ultrasonique (10) dans la première direction et au moins un transducteur ultrasonique (10) dans la deuxième direction ; et
le fait de commander à un transducteur ultrasonique (10), correspondant à la zone dans laquelle se trouve la matière étrangère, de fonctionner pour nettoyer le verre comprend :
le fait de commander à des transducteurs ultrasoniques (10), qui sont dans la première direction et la deuxième direction et qui correspondent à la zone dans laquelle se trouve la matière étrangère, de fonctionner pour nettoyer la vitre de véhicule.

3. Procédé de nettoyage de vitre de véhicule selon la revendication 1, dans lequel après le nettoyage de la vitre de véhicule, le procédé de nettoyage de vitre de véhicule comprend en outre :
le fait de déterminer si la zone dans laquelle se trouve la matière étrangère est propre après le nettoyage ; et
lors de la détermination que la zone dans laquelle se trouve la matière étrangère est propre après le nettoyage, le fait de commander au transducteur ultrasonique (10), correspondant à la zone dans laquelle se trouve la matière étrangère, de s'arrêter de fonctionner.

4. Procédé de nettoyage de vitre de véhicule selon n'importe laquelle des revendications 1 à 3, dans lequel les informations de détection sont des informations d'image, et la détermination d'une zone spécifique dans laquelle se trouve la matière étrangère comprend :
le fait de déterminer, sur la base des informations d'image et d'un modèle de classification de réseau neuronal, la zone spécifique dans laquelle se trouve la matière étrangère.

5. Procédé de nettoyage de vitre de véhicule selon la revendication 4, dans lequel avant le nettoyage de la vitre de véhicule, le procédé de nettoyage de vitre de véhicule comprend en outre :
le fait de déterminer, sur la base du modèle de classification de réseau neuronal, si la matière étrangère est de l'eau ; et
le fait de pulvériser un détergent lorsqu'il est déterminé que la matière étrangère n'est pas de l'eau.

6. Procédé de nettoyage de vitre de véhicule selon la revendication 5, dans lequel le modèle de classification de réseau neuronal est obtenu en introduisant plusieurs ensembles d'apprentissage dans un réseau neuronal construit à des fins de formation, et les plusieurs ensembles d'apprentissage sont obtenus en classant les matières étrangères en deux types : eau et non eau, en sélectionnant des objets d'un même type, et en agençant de manière séquentielle les objets comme un échantillon d'apprentissage sur la base du fait qu'une valeur unique est attribuée à chaque zone.

7. Appareil de nettoyage de vitre de véhicule, comprenant :
un appareil de détection (20), configuré pour détecter des informations de nettoyage d'une vitre de véhicule afin d'obtenir des informations de détection ;
un module de traitement de données (40), configuré pour traiter les informations de détection pour déterminer si une matière étrangère est présente sur la vitre de véhicule ;
une pluralité de transducteurs ultrasoniques (10), disposés sur la vitre de véhicule ;
un module d'excitation (30), configuré pour générer une tension à impulsions pour amener la pluralité de transducteurs ultrasoniques (10) à fonctionner ; et
un module de commande principal (70), connecté au module de traitement de données (40) et au module d'excitation (30), et configuré pour : lorsqu'il est déterminé qu'une matière étrangère est présente sur la vitre de véhicule, commander au module d'excitation (30) d'amener la pluralité de transducteurs ultrasoniques (10) à fonctionner pour nettoyer la vitre de véhicule,
**caractérisé en ce que** le module de traitement données (40) est configuré pour diviser la vitre de véhicule sur la base d'emplacements dans lesquels la pluralité de transducteurs ultrasoniques (10) sont disposés, et déterminer une zone spécifique dans laquelle se trouve la matière étrangère ; et le module de commande principal (70) est configuré pour commander au module d'excitation (30) d'amener un transducteur ultrasonique (10), correspondant à la zone dans laquelle se trouve la matière étrangère, à fonctionner pour nettoyer la vitre de véhicule.

8. Appareil de nettoyage de vitre de véhicule selon la revendication 7, dans lequel la pluralité de transducteurs ultrasoniques (10) sont agencés séparément dans une première direction et une deuxième direction le long des bords de la vitre de véhicule, et les première et deuxième directions s'entrecoupent ; le module de traitement de données (40) divise la vitre de véhicule en plusieurs zones sur la base de lignes de division entre des transducteurs ultrasoniques (10) adjacents dans la première direction et la deuxième direction et d'un point d'intersection des lignes de division, dans lequel chaque zone correspond à au moins un transducteur ultrasonique (10) dans la première direction et à au moins un transducteur ultrasonique (10) dans la deuxième direction ; et le module de commande principal (70) est configuré pour commander aux transducteurs ultrasoniques (10), qui sont la première direction et la deuxième direction et qui correspondent à la zone dans laquelle se trouve la matière étrangère, de fonctionner pour nettoyer la vitre de véhicule.

9. Appareil de nettoyage de vitre de véhicule selon la revendication 8, dans lequel après que le module de commande principal (70) commande au module d'excitation (30) d'amener le transducteur ultrasonique (10), correspondant à la zone dans laquelle se trouve la matière étrangère, de fonctionner pour nettoyer la vitre de véhicule, le module de traitement de données (40) est configuré en outre pour déterminer si la zone dans laquelle se trouve la matière étrangère est propre après le nettoyage ; et le module de commande principal (70) est configuré en outre pour : lorsqu'il est déterminé que la zone dans laquelle se trouve la matière étrangère est propre après le nettoyage, commander au module d'excitation (30) d'amener le transducteur ultrasonique (10), correspondant à la zone dans laquelle se trouve la matière étrangère, à arrêter de fonctionner.

10. Appareil de nettoyage de vitre de véhicule selon n'importe laquelle des revendications 7 à 9, dans lequel l'appareil de détection (20) est une caméra ; les informations de détection sont des informations d'image ; et le module de traitement de données (40) est configuré spécifiquement pour déterminer, sur la base des informations d'image et d'un modèle de classification de réseau neuronal, la zone spécifique dans laquelle se trouve la matière étrangère.

11. Appareil de nettoyage de vitre de véhicule selon la revendication 10, dans lequel l'appareil de nettoyage de vitre de véhicule comprend en outre un appareil de nettoyage auxiliaire (50) et un module de commande de nettoyage (60) ; le module de commande principal (70) étant connecté en outre au module de commande de nettoyage (60) ; le module de traitement de données (40) étant configuré en outre pour déterminer, sur la base du modèle de classification de réseau neuronal, si la matière étrangère est de l'eau ; et le module de commande principal (70) étant configuré en outre pour : lorsqu'il est déterminé que la matière étrangère n'est pas de l'eau, commander, en utilisant le module de commande de nettoyage (60), à l'appareil de nettoyage auxiliaire (50) de pulvériser du détergent.

12. Appareil de nettoyage de vitre de véhicule selon la revendication 7, dans lequel le module d'excitation (30) comprend :
une unité d'élévation de tension (31), configurée pour élever une tension pour un courant continu à basse tension fourni par une alimentation d'énergie d'une unité de tête de véhicule ; et
une unité d'excitation en demi-pont (32), connectée à l'unité d'élévation de tension (31), et configurée pour convertir un courant continu, obtenu après l'élévation de tension, en une tension à impulsions élevées à une fréquence qui correspond au transducteur ultrasonique (10).

13. Véhicule, comprenant une vitre de véhicule, le véhicule comprenant en outre l'appareil de nettoyage de vitre de véhicule selon n'importe laquelle des revendications 7 à 12.
